**Europäisches Patentamt**

(19) **European Patent Office**

**Office européen des brevets**

(11) Veröffentlichungsnummer: **0 155 662**

**A2**

(12) # EUROPÄISCHE PATENTANMELDUNG

(21) Anmeldenummer: 85103108.8

(22) Anmeldetag: 18.03.85

(51) Int. Cl.⁴: **B 23 Q 3/155**
**B 23 B 31/44, G 05 B 19/12**

(30) Priorität: 21.03.84 DE 3410410

(43) Veröffentlichungstag der Anmeldung:
25.09.85 Patentblatt 85/39

(84) Benannte Vertragsstaaten:
CH FR GB IT LI

(71) Anmelder: MAHO WERKZEUGMASCHINENBAU BABEL
& CO.
Postfach 1280
D-8962 Pfronten/Allgäu(DE)

(72) Erfinder: Babel, Werner
Achweg 19
D-8962 Pfronten-Meilingen(DE)

(74) Vertreter: Patentanwälte Beetz sen. - Beetz jun. Timpe -
Siegfried - Schmitt-Fumian
Steinsdorfstrasse 10
D-8000 München 22(DE)

(54) **Werkzeughalter mit Datenträger zur Kennung seines Werkzeuges.**

(57) Gegenstand der Erfindung ist ein Werkzeughalter mit elektronisch lesbarem Datenträger, in dem die das eingespannte Werkzeug kennzeichnenden Daten gespeichert sind.

Der in Form eines Chips ausgebildete Datenträger 3 enthält Festwertspeicher mit einzeln löschbaren und einschreibbaren Datenstationen, in die Daten über den jeweiligen Werkzeugzustand eingegeben werden.

MAHO Werkzeugmaschinenbau Babel & Co.
D-8962 Pfronten
_____


Werkzeughalter mit Datenträger zur Kennung
seines Werkzeuges


Die Erfindung betrifft einen Werkzeughalter mit
Datenträger zur Kennung des darin eingespannten Werkzeuges.

In modernen Großbetrieben mit einer Vielzahl von
unterschiedlichen programmgesteuerten Werkzeugmaschinen sind bis zu mehreren Hundert Einzelwerkzeuge im
Umlauf, wobei einzelne Stationen des Umlaufes die Werkzeugspeicher, die Vorrats- bzw. Zwischenlager und die
Rüst-Betriebspunkte (Werkstatt) sind, in denen die verschlissenen Werkzeuge wieder nachgearbeitet werden. Bei
Betrieben mit hohem Automatisierungsgrad und einer Anzahl von Bearbeitungszentren ergeben sich verschiedene Probleme, die durch die jeweils eingesetzten Werk-112-(x2258)-Sd-E zeuge - bzw. deren derzeitiger Zustand - verursacht werden. So muß beispielsweise bei der programmgesteuerten Bearbeitung eines Werkstückes die Steuerung Informationen über den Zustand des jeweils einzusetzenden Werkzeuges erhalten, aus denen u. a. hervorgeht, ob und um welche Beträge der Schneidkopf des Werkzeuges bzw. seine Schneiden nachgearbeitet worden sind. Da ein- oder mehrmals nachgeschliffene Werkzeuge eine andere Form und insbesondere Länge als neue Werkzeuge haben, muß diese Längenabnahme bei der Null-Einstellung und dem jeweiligen Vorschub berücksichtigt werden. Bisher war es notwendig, daß ein Werkzeug vor seinem Einsetzen zusammen mit dem Werkzeughalter in das Magazin einer programmgesteuerten Werkzeugmaschine ausgemessen wird und daß diese Meßwerte zusammen mit den anderen Kennungsdaten des Werkzeuges in die Programmsteuerung eingespeichert werden. Die Durchführung von Messungen nach dem jeweiligen Aufrüsten des Werkzeuges in der Werkstatt erwies sich insofern als unzweckmäßig, weil keine Möglichkeit bestand, dieses Werkzeug vor seinem Einbau in das Maschinen-Magazin auch bezüglich seines Zustandes genau und eindeutig zu identifizieren.

Aufgabe der Erfindung ist es, eine Möglichkeit zur Identifikation jedes einzelnen Werkzeuges und seines jeweiligen Zustandes aufzuzeigen.

Erfindungsgemäß wird diese Aufgabe dadurch gelöst, daß am Werkzeughalter ein Datenträger in Form eines Chips befestigt ist, der einen Festwertspeicher mit einzeln löschbaren und einschreibbaren Datensta-

tionen enthält.

Der erfindungsgemäß am Werkzeughalter befestigte
Datenträger enthält einmal Informationen über den Werkzeugtyp und über dessen jeweiligen Zustand. Nach jedem
Nachschleifen wird das Werkzeug vermessen und seine
Meßwerte werden in den Speicher eingeschrieben. Gleichzeitig werden diese Werte in den Speicher der zentralen Steuerung eingegeben, was beispielsweise durch Vorbeibewegen des Werkzeughalters an einem Lesekopf erfolgen kann. Durch Vorsehen weiterer Leseköpfe beispielsweise an der Ein- bzw. Ausgabestation der Lagerhaltung oder am jeweiligen Maschinen-Magazin kann das
Werkzeug identifiziert werden. Die numerische Steuerung der einzelnen Maschine ist damit in der Lage,
die Länge des jeweiligen Werkzeuges zu berücksichtigen und den Nullpunkt bzw. den maximal möglichen Vorschub entsprechend einzustellen.

Der erfindungsgemäße Datenträger kann EEPROMs
oder optoelektrische Speicher aufweisen, in die die
jeweiligen Daten in üblicher Weise eingeschrieben und
ausgelesen werden können.

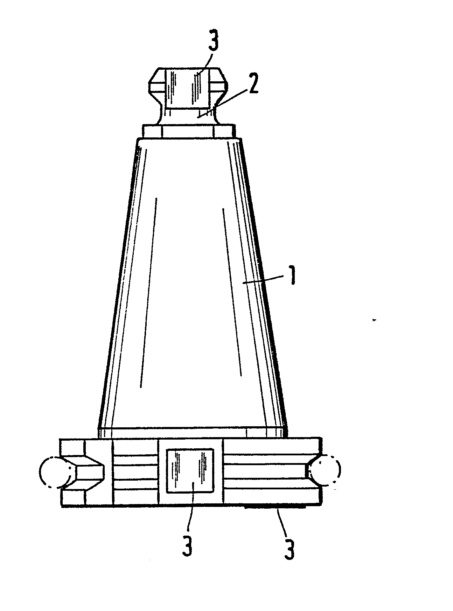

Im folgenden wird ein Ausführungsbeispiel der Erfindung anhand eines in der Zeichnung dargestellten
Steilkegels beschrieben.

Der dargestellte Werkzeughalter in Form eines
Steilkegels 1 weist entweder an seinem Anzugsbolzen
2 oder an einer Fläche am breiteren Ende einen Datenträger in Form eines Streifens oder Plättchen 3 auf.
Die Lage dieses Datenträgers wird so gewählt, daß die eingespeicherten Daten beim Transport und/oder der Handhabung des Werkzeughalters durch einen Lesekopf möglichst berührungsfrei erfaßt werden können.

Ansprüche
------------------

1. Werkzeughalter mit Datenträger, in dem die das eingespannte Werkzeug kennzeichnenden Daten gespeichert
sind,

'd a d u r c h      g e k e n n z e i c h n e t ,

daß der Datenträger. (3) einen Festwertspeicher mit
einzeln löschbaren und einschreibbaren Datenstationen
enthält, in dem Daten über den jeweiligen Werkzeugzustand eingegeben sind.

2. Werkzeughalter nach Anspruch 1,
dadurch gekennzeichnet,
daß der Datenträger (3) als Speicher EPROMS enthält.

3. Werkzeughalter nach Anspruch 1,
dadurch gekennzeichnet,
daß der Datenträger optoelektrische Speicher enthält.

112-(x2258)-Sd-E